Europäisches Patentamt

European Patent Office

Office européen des brevets

(11) Veröffentlichungsnummer: **0 254 762**

A1

# EUROPÄISCHE PATENTANMELDUNG

(21) Anmeldenummer: 86110575.7

(22) Anmeldetag: 31.07.86

(51) Int. Cl.⁴: **G02B 26/10** , **H04N 5/33** , **G02B 13/08**

(43) Veröffentlichungstag der Anmeldung:
03.02.88 Patentblatt 88/05

(84) Benannte Vertragsstaaten:
**AT BE CH DE FR GB IT LI LU NL SE**

(71) Anmelder: **Pusch, Günter, Dr.-Ing.**
**Bannholzweg 12 Postfach 49**
**D-6903 Neckargemünd(DE)**

(72) Erfinder: **Pusch, Günter, Dr.-Ing.**
**Bannholzweg 12 Postfach 49**
**D-6903 Neckargemünd(DE)**

(74) Vertreter: **Paul, Dieter-Alfred, Dipl.-Ing.**
**Fichtestrasse 18**
**D-4040 Neuss 1(DE)**

(54) Verfahren zum Abtasten thermographischer Bilder sowie Vorrichtung zur Durchführung dieses Verfahrens.

(57) Bei einem Verfahren zum Abtasten thermographischer Bilder wird das aufgenommene Bild insbesondere polar abgetastet. Zur Verbesserung der Bilddarstellung ist das Verfahren dadurch gekennzeichnet, daß das Bild vor der Abtastung (7,11) durch eine anamorphotische Abbildung (2) verzerrt und das abgetastete Bild dann wieder elektronisch entzerrt wird.

EP 0 254 762 A1

## Verfahren zum Abtasten thermographischer Bilder sowie Vorrichtung zur Durchführung dieses Verfahrens

Die Erfindung betrifft ein Verfahren zum Abtasten thermographischer Bilder, bei dem das aufgenommene Bild insbesondere polar abgetastet wird. Ferner bezieht sich die Erfindung auf eine Vorrichtung zur Durchführung des Verfahrens mit einer Eingangsoptik, einer insbesondere polar arbeitenden Abtastoptik, z.B. mit einer Reversions-und einer Zeilenabtastoptik, einem Detektor und einer elektronischen Auswerteeinrichtung.

Ein solches Verfahren bzw. eine solche Vorrichtung sind beispielsweise der DE-AS 22 26 372, DE-OS 24 41 771, DE-AS 25 35 394 und DE-PS 27 27 811 zu entnehmen. Die dort beschriebene polare Abtastung geschieht dabei im Grundsatz so, daß das über ein Objektiv eingefangene Bild mittels einer Reversionsoptik, beispielsweise einem Dachkantenspiegel oder einem Schmidt-Pechan-Prisma, in Drehung versetzt und das sich drehende Bild dann mittels eines Polygonal-Prisma zeilenförmig abgetastet wird, wobei die Abtastlinien durch den Mittelpunkt des Bildes gehen. Die aus dem Polygonal-Prisma dann austretenden Strahlen werden anschließend von einer Transformationsoptik aufgenommen und in ein konvergierendes Strahlenbündel umgewandelt, dessen Spitze in einem Detektor liegt. Zum Schutz gegen das Eindringen von Störstrahlen können dann noch spiegelnde Blenden vorgesehen sein.

Die polare Abtastung hat den Vorteil, daß sich die Abtastlinien bzw. -zeilen zur Bildmitte hin zunehmend überlappen, wodurch die Empfindlichkeit und die geometrische Auflösung im zentralen Bereich des Bildes besonders hoch ist. Ein in diesem Bereich eingefangenes Objekt wird entsprechend gut aufgelöst dargestellt.

Die Vergrößerung eines Bildes ist nur in begrenztem Umfang möglich, da ansonsten der Bildausschnitt klein wird. Ein kleiner Bildausschnitt erschwert jedoch die Suche nach bestimmten Objekten, beispielsweise militärischen Zielen. Zwischen Vergrößerung und Bildausschnitt muß deshalb ein Kompromiß geschlossen werden.

Der Erfindung liegt die Aufgabe zugrunde, ein Verfahren zu finden, mit dem die Bilddarstellung verbessert werden kann. Außerdem soll eine entsprechende Vorrichtung zur Durchführung dieses Verfahrens bereitgestellt werden.

Die erstgenannte Aufgabe wird erfindungsgemäß dadurch gelöst, daß das Bild vor der Abtastung durch eine anamorphotische Abbildung verzerrt und das abgetastete Bild dann wieder elektronisch entzerrt wird. Bei einer solchen anamorphotischen Abbildung wird ein Bild in einer Richtung dadurch verzerrt, daß es in dieser Richtung einen größeren Abbildungsmaßstab hat als in der anderen Richtung, d.h. daß es in der erstgenannten Richtung vergrößert und in der dazu senkrechten Richtung weniger stark oder gar nicht vergrößert oder sogar verkleinert wird. Das solchermaßen verzerrte Bild wird dann anschließend abgetastet und mit elektronischen Mitteln wieder so entzerrt, daß die Differenz in den Maßstäben wieder rückgängig gemacht wird. Aufgrund dieses Verfahrens erhält man in Richtung der Verzerrung eine verbesserte Empfindlichkeit und geometrische Auflösung, die ein klareres und kontrastreicheres Erkennen des Objektes ermöglicht, andererseits aber den Bildausschnitt in der dazu senkrechten Richtung nicht einschränkt.

Dabei wird man die Verzerrung in der Regel so vornehmen, daß die geringere Vergrößerung bzw. Verkleinerung in Richtung der vorherrschenden Suchrichtung erfolgt. Bei an Land oder auf See benutzten Vorrichtungen wird dies in der Regel die Horizontale sein, da mit diesen Vorrichtungen überwiegend der Horizont abgesucht wird. Ein sich am Horizont abzeichnendes Objekt wird dann in der Vertikalen verzerrt, d.h. vergrößert und dann in verzerrtem Zustand abgetastet. Nach der elektronischen Entzerrung, d.h. Verkleinerung steht dann ein elliptisches Bild zur Verfügung, bei dem das eingefangene Objekt wegen der verdichtenden Wirkung der Entzerrung wesentlich kontrastreicher und damit auch in den Einzelheiten deutlicher erkennbar dargestellt ist. Diese Darstellung entspricht dann auch weitgehend dem visuellen Feld des menschlichen Auges.

Die anamorphotische Abbildung kann durch eine entsprechende Optik auch mit einer afokalen Abbildung kombiniert werden. Eine solche Kombination ist insbesondere dann von Vorteil, wenn das Bild für die polare Abtastung zunächst in Drehung versetzt und dann zeilenförmig abgetastet wird. Auf diese Weise können optische Fehler, die bei der zeilenförmigen Abtastung insbesondere mit einem Polygonal-Prisma entstehen, weitestgehend eliminiert werden.

Um Störstrahlungen zu vermeiden, sollten die über einen kreisrunden Querschnitt hinausgehenden Teile des Bildes störstrahlungsfrei ausgeblendet werden.

Eine Vorrichtung zur Durchführung des erfindungsgemäßen Verfahrens ist dadurch gekennzeichnet, daß die Eingangsoptik eine anamorphotische Optik aufweist und daß die Auswerteeinrichtung mit einer Entzerrelektronik zur Aufhebung der durch die anamorphotische Optik bewirkten Verzerrung versehen ist. Die anamorphotische Optik besteht dabei zweckmäßigerweise aus zwei Zylinderlinsen, deren von ihnen erzeugten Bilder in einer gemeinsamen Bildebene liegen. Dabei besteht die Möglichkeit, die Zylinderlinsen als afokal abbildendes System auszubilden. Alternativ dazu kann jedoch auch eine zusätzliche Optik zwischen anamorphotischer Optik und Abtastoptik vorgesehen sein. Letzteres bietet sich dann an, wenn das Objektiv austauschbar sein soll, um Objektive verschiedener Brennweiten einsetzen zu können. Es kann beispielsweise auch eine als Schiefspiegel ausgebildete, anamorphotische Zylinderoptik als Eingangsobjektiv verwendet werden.

Zweckmäßigerweise ist die anamorphotische Optik derart ausgebildet, daß die vertikale Bildachse gegenüber der Horizontalen vergrößert wird. Selbstverständlich besteht auch die Möglichkeit, umgekehrt zu verfahren, wenn das Gerät vorherrschend in einer vertikalen Suchebene geführt wird.

Nach der Erfindung ist desweiteren vorgesehen, daß hinter der anamorphotischen Optik eine Feldlinse zur Pupillentransformation angeordnet ist, damit die Strahlen immer voll im Objektiv abgebildet werden.

Zwischen Abtastoptik und Detektor sollte zusätzlich eine Kolliminationsoptik angeordnet sein, um die von der Abtastoptik kommenden Strahlen auf den Detektor zu konzentrieren.

Es ist desweiteren von Vorteil, wenn zumindest eine Blende zum spiegelnden Ausblenden von über einen kreisrunden Querschnitt hinausgehenden Bildteilen spätestens unmittelbar hinter der Abtastoptik vorgesehen ist. Auf diese Weise werden Störstrahlen vermieden.

Nach einem weiteren Merkmal der Erfindung ist vorgeschlagen, daß die Abtastoptik in an sich bekannter Weise aus einer Reversionsoptik und einer Zeilenabtastoptik besteht. Diese Abtastoptik ermöglicht ein polares Abtasten des Bildes mit zur Mitte hin zunehmender Empfindlichkeit. Für die elektronische Auswertung des Bildes sollte die Reversionsoptik einen Winkelgeber aufweisen, der Eingangssignale für die Auswerteeinrichtung in Abhängigkeit vom Drehwinkel gibt. Auch die Zeilenabtastoptik sollte einen Winkelgeber aufweisen, der Eingangssignale für die Auswerteeinrichtung zur Synchronisierung und Helligkeitsanpassung in Abhängigkeit vom jeweiligen Radius des abgetasteten Bildpunktes gibt.

Schließlich sieht die Erfindung vor, daß die Reversionsoptik aus zwei Zylinderlinsen besteht, mit deren Hilfe man das Bild in Drehung versetzen kann. Solche Zylinderlinsen sind einfacher und leichter als die bekannten Reversionsoptiken mit Prismen oder Dachkantenspiegeln.

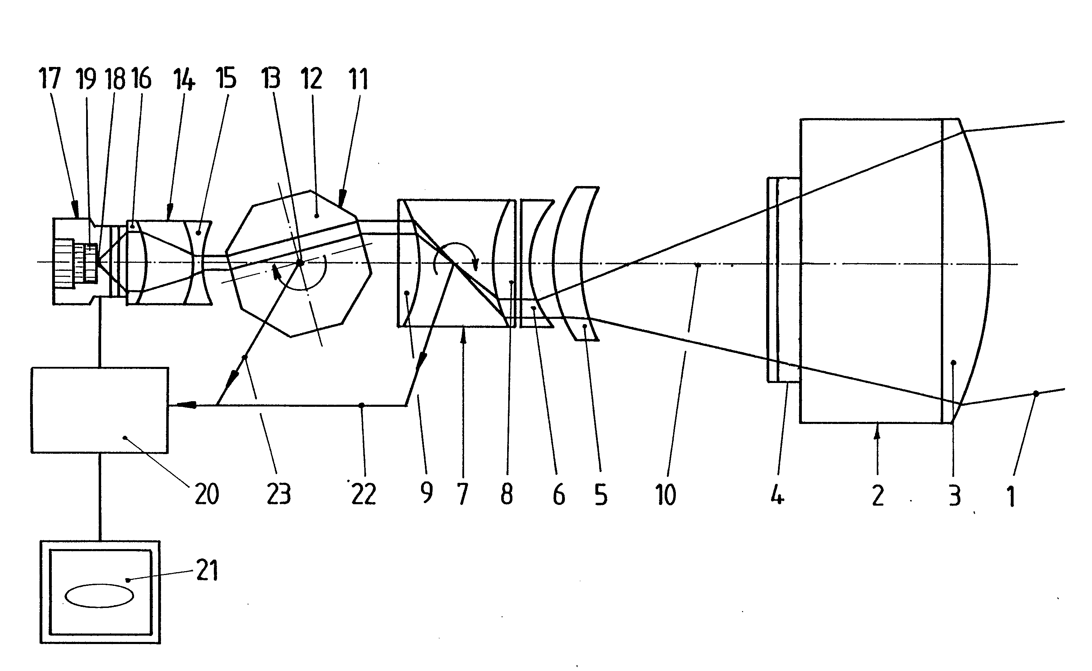

In der Zeichnung ist die Erfindung an Hand eines Ausführungsbeispiels näher veranschaulicht. Sie zeigt die Optik einer Vorrichtung zur Abtastung thermographischer Bilder.

Bei dieser Vorrichtung wird die Empfangsstrahlung(en) durch eine ein Objektiv bildende, anamorphotische Optik (2) aufgenommen, die aus zwei um 90° gegen die optische Achse verdrehten Zylinderlinsen (3, 4) besteht. Jede dieser beiden Zylinderlinsen (3, 4) vergrößert das Bild lediglich in einer Richtung, wobei die Vergrößerung unterschiedlich ist. Im vorstehenden Fall wird das Bild in der Vertikalen stärker vergrößert als in der Horizontalen, so daß es vertikal verzerrt ist.

An die anamorphotische Optik (2) schließen sich eine Feldlinse (5) und eine Streulinse (6) an. Letztere sorgt für eine afokale Abbildung, also die Parallelisierung der Strahlen.

Die auf diese Weise parallelisierten Strahlen gelangen in eine Reversionsoptik (7), die im vorliegenden Fall aus zwei Zylinderlinsen besteht, deren konvexe Seiten sich gegenüberstehen. Die Reversionsoptik (7) rotiert um die Bildachse (10), wodurch das aufgenommene Bild eine entsprechende Drehbewegung ausführt.

Es schließt sich eine Zeilenabtastoptik (11) an, die als Polygonal-Prisma (12) ausgebildet ist. Dieses Polygonal-Prisma (12) ist um eine senkrecht zur Zeichnungsebene liegende Drehachse (13) drehbar, so daß das sich drehende Bild mit durch den Mittelpunkt gehenden Zeilen polar abgetastet wird. Die aus dem Polygonal-Prisma (12) austretenden Strahlen passieren eine Kolliminationsoptik (14), bestehend aus einer Streulinse (15) und einer Sammellinse (16). Die konvergierenden Strahlen treten dann in einen Detektor (17) ein, und zwar unter einem Einfallswinkel von ca. 40° bis 45°. In dem Detektor (17) sitzen Detektorelemente (18) auf einem tiefgekühlten Elementenhalter (19).

Die von den Detektorelementen (18) ausgehenden Signale gelangen in eine Abtastelektronik (20) und werden dort zur Darstellung des Bildes in einem Bildschirm (21) verarbeitet. Damit das durch die anamorphotische Optik (2) verzerrte Bild synchronisiert und entzerrt wird, weist die Reversionsoptik (7) einen hier nicht näher dargestellten Drehwinkelgeber auf, der über die Leitung (22) entsprechende Signale an die Abtastelektronik (20) gibt. Auf diese Weise kann die Abtastelektronik (20) die Zeilenamplitude in Abhängigkeit vom Drehwinkel der Reversionsoptik entsprechend der Verzerrung so steuern, daß die Verzerrung wieder aufgehoben wird. Dies geschieht mit an sich bekannten elektronischen Elementen und bedarf deshalb keiner näheren Beschreibung.

Auch die Zeilenabtastoptik (11) weist einen Drehwinkelgeber auf, über den der Betrag des Radius des jeweils abgetasteten Bildpunktes ermittelt und über die Leitung (23) an die Abtastelektronik (20) gegeben werden kann. Auf diese Weise kann eine elektronische Aufhellung des zum Rand hin dunkler werdenden Bildes durchgeführt werden, so daß das im Bildschirm (21) gezeigte Bild die Helligkeit bis zum Rand richtig wiedergibt.

Im übrigen ist das im Bildschirm (21) erscheinende Bild eine liegende Ellipse, da das aufgenommene runde Bild zunächst in der Vertikalen verzerrt ist und bei der Rückgängigmachung dieser Verzerrung das Bild in der Vertikalen sozusagen komprimiert wird.

Die Abtastelektronik (20) kann mit der aus der DE-PS 27 27 811 und der US-PS 4 264 929 bekannten Verstärkerkette ausgestattet werden. Auf diese Weise wird zusätzlich eine Anpassung an die Optik des Auges vorgenommen.

**Ansprüche**

1. Verfahren zum Abtasten thermographischer Bilder, bei dem das aufgenommene Bild insbesondere polar abgetastet wird,
dadurch gekennzeichnet, daß das Bild vor der Abtastung durch eine anamorphotische Abbildung verzerrt und das abgetastete Bild dann wieder elektronisch entzerrt wird.

2. Verfahren nach Anspruch 1, dadurch gekennzeichnet, daß das Bild durch die anamorphotische Abbildung in der Vertikalen stärker als in der Horizontalen vergrößert wird.

3. Verfahren nach Anspruch 1 oder 2,
dadurch gekennzeichnet, daß die anamorphotische mit einer afokalen Abbildung kombiniert ist.

4. Verfahren nach einem der Ansprüche 1 bis 3, dadurch gekennzeichnet, daß das Bild für die polare Abtastung zunächst in Drehung versetzt und dann zeilenförmig abgetastet wird.

5. Verfahren nach Anspruch 3 und 4,
dadurch gekennzeichnet, daß das Bild spätestens vor der zeilenförmigen Abtastung afokal abgebildet wird.

6. Verfahren nach einem der Ansprüche 1 bis 5, dadurch gekennzeichnet, daß die über einen kreisrunden Querschnitt hinausgehenden Teile des Bildes störstrahlungsfrei ausgeblendet werden.

7. Vorrichtung zur Durchführung des Verfahrens nach einem der Ansprüche 1 bis 6, mit einer Eingangsoptik, einer insbesondere polar arbeitenden Abtastoptik, beispielsweise mit einer Reversions-und einer Zeilenabtastoptik, einem Detektor und einer elektronischen Auswerteeinrichtung,
dadurch gekennzeichnet, daß die Eingangsoptik eine anamorphotische Optik (2, 3, 4) aufweist und daß die Auswerteeinrichtung (20) mit einer Entzerrelektronik zur Aufhebung der durch die anamorphotische Optik (2, 3, 4) bewirkten Verzerrung versehen ist.

8. Vorrichtung nach Anspruch 7,
dadurch gekennzeichnet, daß die anamorphotische Optik (2) in an sich bekannter Weise aus zwei Zylinderlinsen (3, 4) oder zwei Zylinderspiegeln besteht, deren von ihnen erzeugten Bilder in einer gemeinsamen Bildebene liegen.

9. Vorrichtung nach Anspruch 7 oder 8,
dadurch gekennzeichnet, daß die Zylinderlinsen als afokal abbildendes System ausgebildet sind.

10. Vorrichtung nach einem der Ansprüche 7 bis 9,
dadurch gekennzeichnet, daß zwischen anamorphotischer Optik (2, 3, 4) und Abtastoptik (7, 8, 9; 11, 12) eine Optik (6) zur Parallelisierung des Strahlengangs vorgesehen ist.

11. Vorrichtung nach einem der Ansprüche 7 bis 10,
dadurch gekennzeichnet, daß die anamorphotische Optik (2, 3, 4) derart ausgebildet ist, daß die verikale Bildachse stärker vergrößert wird als die horizontale.

12. Vorrichtung nach einem der Ansprüche 7 bis 11,
dadurch gekennzeichnet, daß hinter der anamorphotischen Optik (2, 3, 4) eine Feldlinse (5) angeordnet ist.

13. Vorrichtung nach einem der Ansprüche 7 bis 12,
dadurch gekennzeichnet, daß zwischen Abtastoptik (7, 8, 9; 11, 12) und Detektor (17) eine Kollimationsoptik (14, 15, 16) angeordnet ist.

14. Vorrichtung nach einem der Ansprüche 7 bis 13,
dadurch gekennzeichnet, daß zumindest eine Blende zum spiegelnden Ausblenden von über einen kreisrunden Querschnitt hinausgehenden Bildteilen spätestens unmittelbar hinter der Abtastoptik (7, 8, 9; 11, 12) vorgesehen ist.

15. Vorrichtung nach einem der Ansprüche 7 bis 14,
dadurch gekennzeichnet, daß die Abtastoptik aus einer Reversionsoptik (7, 8, 9) und einer Zeilenabtastoptik (11, 12) besteht.

16. Vorrichtung nach Anspruch 15,
dadurch gekennzeichnet, daß die Reversionsoptik (7) einen Winkelgeber aufweist, der Eingangssignale für die Auswerteeinrichtung (20) zur Entzerrung in Abhängigkeit vom Drehwinkel gibt.

17. Vorrichtung nach Anspruch 15 oder 16,
dadurch gekennzeichnet, daß die Zeilenabtastoptik (11) einen Winkelgeber aufweist, der Eingangssignale für die Auswerteeinrich (20) zur Helligkeitsanpassung in Abhängigkeit vom jeweiligen Radius des abgetasteten Bildpunktes gibt.

18. Vorrichtung nach einem der Ansprüche 15 bis 17, dadurch gekennzeichnet, daß die Reversionsoptik (7) aus zwei Zylinderlinsen (8, 9) besteht.

## EINSCHLÄGIGE DOKUMENTE

EP 86110575.7

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| D,Y | DE - A1 - 2 441 771 (ELEKTRO-OPTIK)<br>* Seite 3, Zeile 1 - Seite 4, Zeile 3; Fig. 1,2 * | 1,2 | G 02 B 26/10<br>H 04 N 5/33<br>G 02 B 13/08 |
| A | | 4,7,12, 15 | |
| | -- | | |
| Y | CH - A5 - 651 941 (CERBERUS) | 1,2 | |
| A | * Seite 2, Spalte 2, Zeile 9 - Seite 3, Spalte 1, Zeile 68; Seite 4, Spalte 2, Zeilen 39-50; Fig. 1,4,6 * | 8,11 | |
| | -- | | |
| A | US - A - 3 877 777 (GLENN)<br>* Spalte 2, Zeilen 20-40; Fig. 1-3 * | 1,7,8 | |
| | -- | | RECHERCHIERTE SACHGEBIETE (Int. Cl.4) |
| A | US - A - 3 946 150 (GRAFTON)<br>* Fig. 1,3a,3b; Spalte 2, Zeilen 37-39; Spalte 4, Zeilen 59-62 * | 1,7,8 | G 02 B 26/00<br>G 02 B 13/00<br>G 02 B 23/00 |
| | -- | | H 04 N 5/00 |
| A | DE - A - 2 362 936 (TEXAS IN- STRUMENTS)<br>* Fig. 1-3; Seite 7, letzter Absatz - Seite 14, 1. Absatz * | 1,3,7, 9 | H 04 N 1/00<br>H 04 N 3/00<br>H 04 N 7/00 |
| | -- | | |
| D,A | DE - B2 - 2 535 394 (INDUSTRIE- AUTOMATION)<br>* Fig. 1,2; Anspruch 1 * | 7,12, 14,15 | |
| | -- | | |

Der vorliegende Recherchenbericht wurde für alle Patentansprüche erstellt.

| Recherchenort | Abschlußdatum der Recherche | Prüfer |
|---|---|---|
| WIEN | 24-03-1987 | GRONAU |

**Europäisches Patentamt**

# EUROPÄISCHER RECHERCHENBERICHT

Nummer der Anmeldung

| EINSCHLÄGIGE DOKUMENTE | | | EP 86110575.7 |
|---|---|---|---|

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | DE - B2 - 2 056 812 (HAWKER)<br>* Fig. 1a,1b,2a,2b,3,4,5; Spalte 1, Zeile 57 - Spalte 2, Zeile 58 *<br><br>---- | 1,6,7, 14 | |
| | | | **RECHERCHIERTE SACHGEBIETE (Int. Cl.4)** |

Der vorliegende Recherchenbericht wurde für alle Patentansprüche erstellt.

| Recherchenort | Abschlußdatum der Recherche | Prüfer |
|---|---|---|
| WIEN | 24-03-1987 | GRONAU |